# EUROPEAN PATENT SPECIFICATION

(11) **EP 2 208 013 B1**
(45) Date of publication and mention of the grant of the patent: **06.01.2016**
(21) Application number: 08839259.2
(22) Date of filing: 16.10.2008
(51) Int. Cl.: G01B 3/02, G01B 3/10, G01B 5/00

(54) **METROLOGICAL SCALE AND METHOD OF MANUFACTURE**
METROLOGISCHE SKALA UND HERSTELLUNGSVERFAHREN
ECHELLE MÉTROLOGIQUE ET PROCÉDÉ DE FABRICATION

(30) Priority: 18.10.2007 GB 0720408
(43) Date of publication of application: 21.07.2010
(73) Proprietor: Renishaw PLC, Wotton-Under-Edge Gloucestershire GL12 8JR (GB)
(72) Inventor: ELLIN, Alexander, David, Scott, Horsley, Gloucestershire GL6 0PP (GB); HENSHAW, James, Reynolds, Stroud, Gloucestershire GL5 4BB (GB)
(74) Representative: Dunn, Paul Edward
(86) International application number: PCT/GB2008/003511
(87) International publication number: WO 2009/050470

(56) References cited:
- EP-A1- 0 622 613
- EP-A2- 1 365 207
- DE-A1- 2 844 021
- DE-A1- 3 503 779
- DE-A1- 3 503 804
- DE-A1- 3 606 773
- US-A- 2 958 939
- US-A1- 2002 152 626
- US-A1- 2005 175 831
- US-A1- 2005 266 212
- US-B1- 6 499 226

## Description

The present invention relates to a metrological scale for scale reading apparatus, and a method of manufacture of said metrological scale. In particular the invention relates to a metrological scale comprising fibre reinforced composite.

A known form of metrological scale reading apparatus for measuring relative displacement of two members comprises a scale on one of the members, the scale having scale marks also known as graduations defining a pattern, and a readhead provided on the other member. A scale having its marks in a periodic pattern is known as an incremental scale and together with the scale reading apparatus provides an output of up and down counts. Such a scale may additionally be provided with reference marks, which, when detected by the readhead, enable the exact position of the readhead to be determined. The scale may alternatively have absolute code marks which enable the readhead to determine its absolute position anywhere on the scale.

Metrological scales may for example be linear, rotary or two-dimensional. Rotary scales may have the scale markings provided radially on a face or axially on the circumference of a rotary part.

One type of metrological scale reading apparatus is an optical scale reading apparatus; such apparatus has means for illuminating the scale and detecting means in the readhead responsive to a resultant light pattern to produce a measure of relative displacement of the scale and readhead.

Incremental optical scales may be amplitude or phase scales. In an amplitude scale the scale pattern is made from two different types of sections. A first type of section reflects incident light to the readhead and the second type of section does not. For example an incremental amplitude scale may comprise alternate reflecting and non-reflecting lines, such as a scale comprising chrome lines on a glass scale. In contrast, a phase scale has a form that reflects light from the different sections at different phases when detected at the readhead.

Scale and readhead systems are not limited to optical systems. Magnetic, capacitance and inductive reading systems are also known.

It is known in the art to manufacture encoder scales from both glass and metal substrates. Both types of scale are suitable for purpose, but each has specific limitations. For example, glass is relatively heavy, and it can be rigid and prone to breakage when in long strips; glass scales need to be packaged and handled with extra care accordingly. Metal scales are more robust than glass scales, and can be made with a thinner cross-section so that the scale is easier to coil for transportation. However, metal scales have the disadvantage that they can be difficult to make to the geometric tolerances required for the highest accuracy, specific alloys can be used to achieve this but these can be expensive. Additionally, metal scales will generally have a higher Coefficient of Thermal Expansion (CTE) than desirable; such that if, for example, the scale is mounted on a measuring machine (which may be made of granite for example and thus have a lower CTE than the scale), the scale will expand more than the machine for a given increase in temperature, and consequently the scale will no longer be as accurate.

It is known from US 5,555,633 to secure a length of scale in the form of a metal tape to a thermally stable material such as carbon fibre. The securing means comprises a layer of adhesive and a component for clamping each end of the tape to the support. However, in securing the tape scale to the support the scale may be stretched or locally distorted such that it is less accurate after mounting. Additionally, much care and attention must be paid to mounting the scale straight on the support; if the scale is not mounted straight, errors will occur in the signal given by the scale reader as it passes over the scale markings.

It is also known from EP0622613 to manufacture by moulding a base scale for capacitance slide callipers from a carbon fibre reinforced plastic. This patent describes how the fibres are woven into a layered sheet. The capacitive electrodes are printed onto the carbon fibre base scale.

EP1365207 discloses a digital caliper gauge having a longitudinal main beam moulded by injection moulding a synthetic resin containing a carbon nanofiber. To form a scale, an electro-conductive layer is formed on a surface of the main beam and then peeled off at a predetermined pitch.

According to a first aspect the present invention provides a method according to claim 1.

The qualities of the substrate can be tailored to achieve a substantially zero coefficient of thermal expansion of the scale body. The coefficient of thermal expansion of the scale body may be less that 3; preferably the coefficient of thermal expansion of the scale body is less than 2; even more preferably the coefficient of thermal expansion of the scale body is less than 1.

Alternatively, the qualities of the substrate can be tailored to match the coefficient of thermal expansion of the scale body to the coefficient of thermal expansion of an item to be measured by the metrological scale. In this case the coefficient of thermal expansion of the scale body may be approximately 8-12, for example by using metal fibres to form the substrate, when it is desired to measure an item comprising metal with the scale. Alternatively the coefficient of thermal expansion of the scale body may be approximately 6-7, for example by using glass fibres, when it is desired to measure an item comprising glass with the scale.

In some applications a scale may be made out of the same material as the workpiece, so as to match the coefficient of thermal expansion of the scale to that of the workpiece; however, in certain applications this is inconvenient as the material of the workpiece has properties that are undesirable properties for a scale. One example of such a material is glass; glass, when made into a scale, can be brittle and easily snapped.

In one aspect of the present invention the qualities of the substrate can be tailored so as to match properties of the substrate and/or scale body to properties of the item that is being measured by the scale formed on the substrate. For example, the coefficient of thermal expansion of the substrate, can be chosen such that the coefficient of thermal expansion of the scale body matches the coefficient of thermal expansion of a workpiece, so that the scale formed in or on the scale body expands and contracts at substantially the same rate as the workpiece does.

Forming a scale body comprising a layer of material and a substrate preferably includes applying a layer to a preformed substrate. Alternatively it may comprise, for example, forming the substrate on or around a preformed layer.

The present invention offers several advantages over the prior art described above. In particular it is advantageous to first form the scale body comprising the layer of material and the fibre reinforced composite substrate, and then make graduations or scale markings in/on the layer, as the graduations are then fixed in position relative to the fibre reinforced composite substrate. The scale markings (or graduations) can then be controlled by the properties of the substrate which can be manufactured to have a substantially zero coefficient of thermal expansion so that the scale pitch does not expand on heating. Additionally, the markings are not stretched apart, distorted, or skewed as they are applied directly to the scale as a whole rather than added onto a support after being made in/on a separate thinner component.

In particular, an advantage of using a fibre reinforced composite substrate is that it is both rigid and robust, whilst also being flexible. Consequently, in contrast to glass it can be made in long lengths, rolled for transportation, and does not need to be handled with extra care. Also, it is easier to manufacture the fibre reinforced composite substrate to the required geometric tolerances than it is for metal.

The fibre reinforced composite is advantageously carbon fibre composite, aramid (aromatic polyamide) fibre composites, glass fibre composite, or a combination of fibre reinforced composites such as carbon, aramid and glass fibre composites. Alternatively the fibres used may be metal fibres, such as copper, aluminium, titanium or magnesium fibres. A mixture of types of metal fibres may be used, or metal fibres may be mixed with other fibres. Preferably the fibre reinforced composite additionally comprises resin.

It is possible to tailor the qualities of the substrate by appropriate choice of fibre, by altering the ratio of fibre to resin, or by changing the type of resin used in the composite. Fibres such as carbon fibre, for example, have a negative coefficient of thermal expansion, whereas resins have a positive coefficient of thermal expansion; this can result in an overall close to zero coefficient of thermal expansion so that the scale does not change size or shape as a result of temperature changes.

It is also possible to tailor the qualities of the substrate using additives. Such additives can affect the ease of plating, for example, or impart on the substrate other useful properties such as, for example, fire retardancy.

Metrological scales are often used on measuring apparatus such as coordinate measuring machines and machine tools; these machines are increasingly being manufactured using carbon fibre and so have similar properties to the scale. For example, if the overall CTE is zero, neither the machine nor scale will expand or contract as a result of changes in temperature. Consequently the scale retains its accuracy at all temperatures.

Preferably the resin is a thermoset resin. Thermoset resins are polymer materials

Preferably the resin is a thermoset resin. Thermoset resins are polymer materials that cure, through the addition of energy, to a stronger form. Thermoset resins are advantageously well suited to high-temperature applications such as in machine tools for example, as once set they do not substantially change form on heating until they reach their decomposition temperature.

Preferably the metrological scale is a reflective type scale. This is where the scale reader is positioned on the same side of the scale as the light source which illuminates the scale. Light is reflected off the surface of the scale and collected in the scale reader. This is different to a transmissive type scale where the light source is positioned on the opposite side of the scale to the scale reader, this requires the scale to have uniform transmissive and refractive properties which can be difficult to engineer with fibrous materials.

The layer of material that is applied to the fibre reinforced composite substrate is preferably thinner than the substrate. Consequently, thermal expansion and other properties of the scale as a whole are thus dominated by the properties of the fibre reinforced composite substrate rather than by the properties of the layer of material on it. However, rather than the fibre reinforced composite substrate controlling the properties of the scale, the thickness of the layer may be chosen such that the scale as a whole has the desired properties.

If the layer is bonded to the substrate, preferably the layer is 10-20% of the thickness of the substrate. If the layer is plated onto the substrate, preferably the layer is 5 to 10 microns thick.

Conveniently, the layer of material comprises a reflective material. In this case, once the non-reflective graduations are made in/on the reflective material the scale can be used as an optical scale immediately; thus saving time in the scale making process as no further steps are required. Advantageously, the layer of material comprises a metal; however, alternatively the layer of material may comprise for example a resin containing reflective particles, or a dielectric layer, or multiple layers of these and other materials.

Alternatively, the layer of material may comprise a non-reflective material. In this case the marks may be made in or on the scale, and a further reflective coating may be applied on top of the layer. Alternatively, the scale marks may comprise a series of alternating light and dark coloured scale markings.

Preferably the step of applying the layer of material to a fibre reinforced composite substrate comprises plating a layer onto to the fibre reinforced composite substrate. As a result of this the layer cannot move relative to the substrate so that the scale markings are fixed relative to the substrate and therefore cannot lose accuracy due to the marks moving with respect to the substrate. Plating methods include, for example, vacuum deposition and sputtering.

The step of applying the layer of material to a fibre reinforced composite substrate conveniently alternatively comprises bonding a preformed layer onto the fibre reinforced composite substrate.

Advantageously, the step of making graduations in the layer of material is performed by etching within the thickness of the layer of material. Alternatively the step of making graduations in the layer of material is performed by completely removing the layer at certain areas of the scale. Etching and complete layer removal in certain areas may be achieved using a laser, or by chemical etching for example. Laser etching has the advantage that it is a quick one step process, and it is relatively easy to make any desired scale pattern.

Other ways of making the scale markings in or on the layer are possible; such as for example marking using an electron beam machine, mangling the layer of material on the substrate, scribing, or other mechanical means.

coating to the metrological scale. Preferably this coating is a non corrosive coating. This has the advantage that the scale will be long lasting and will not become inaccurate due to corrosion. Any number of layers may be applied on top of the layer comprised by the scale. For example it may be necessary to coat the layer of the scale with an intermediate layer in order to finally coat it with a reflective layer, or it may be necessary to apply a transparent layer or coating on top of the layer comprising the scale markings.

Preferably the fibre reinforced composite substrate has been made by pultrusion, this has a number of advantages such as the substrate having a uniform cross-section due to the entire substrate passing through a fixed dimension die, in contrast to a substrate being made by moulding. Additionally, long lengths of the substrate can be made easily as pultrusion is a continuous process. This has the advantage that the scale can be produced to the required length rather than having to make it in sections and join the sections together which can result in inaccuracies in the scale.

The pultrusion method results in unidirectional fibres, so that if the resin in the substrate does expand, through moisture absorption or as a result of a change in temperature for example, expansion occurs preferentially across the width of scale rather than along length of the scale; therefore the scale retains its accuracy better than for example a scale with omni-directional fibres. The pultrusion method also results in less micro cracking than for example moulding the carbon fibre substrate; this means that there is less potential for moisture absorption into the substrate and thus less potential for expansion of the scale.

Preferred embodiments of the invention will now be described by way of example only, with reference to the accompanying drawings wherein:
Figure 1 shows a known metrological scale reading apparatus;
Figure 2a shows a carbon fibre substrate being made by pultrusion;
Figure 2b shows an isometric view of a carbon fibre substrate made by pultrusion as illustrated in figure 2a;
Figure 3 shows a metrological scale made according to the method of the present invention; and
Figure 4 is a flow diagram showing the steps of the method according to an aspect of the present invention.
Figure 5a shows the step of making graduations in the layer of material by laser etching within the thickness of the layer.
Figure 5b shows the step of making graduations in the layer of material by completely removing the layer at certain areas of the scale.

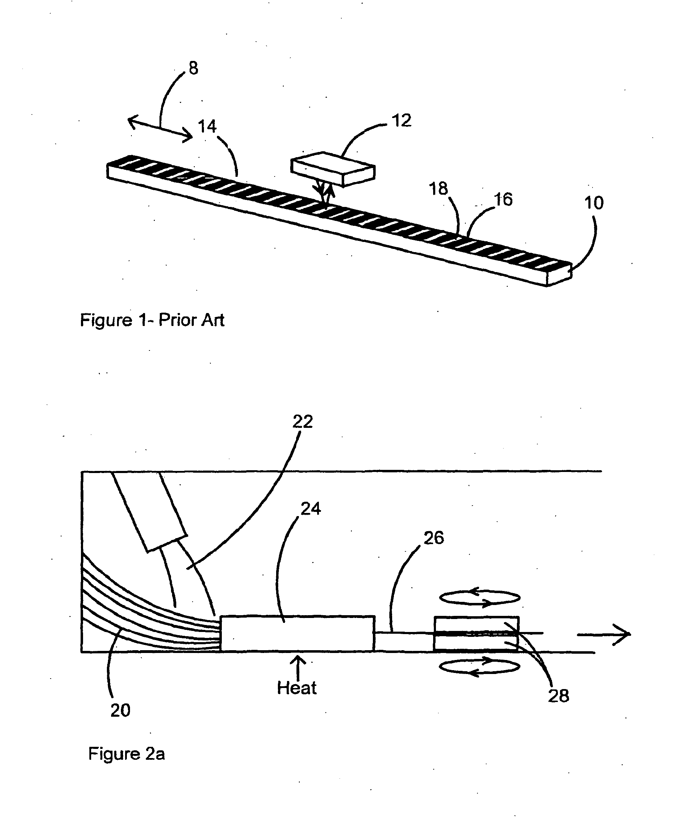

Figure 1 shows a known metrological scale reading apparatus, in particular an optical encoder system. The apparatus comprises a scale 10 and a readhead 12; in use these are mounted on two relatively moveable parts of a machine (not shown). The readhead is moveable relative to the scale, either forwards or backwards in the direction of the arrows 8 along the longitudinal direction of the scale. The scale 10 is made of metal and has periodic markings made of alternate reflective 18 and non-reflective 16 lines which form the incremental scale pattern 14. A light source (not shown) in the readhead 12 illuminates the scale; light reflected by the scale forms a pattern which is detected at the readhead. The readhead 12 is thus able to count the incremental scale markings of the scale pattern 14 as it travels over them.

Figure 2a shows a carbon fibre substrate being made by pultrusion. The bundles of carbon fibres 20 are aligned so as to pass through a die 24. Before the fibres enter the die 24, resin 22 is poured over them. When the fibres 20 and resin 22 enter the die 24 they are heated; under this heat, and the pressure exerted on the fibre/resin mix by the die 24, the composite is cured into a uniform rectangular shaped substrate 26. The substrate 26 is pulled along, for example by caterpillar tracks 28 positioned on either side of the substrate; this perpetuates the continuous pultrusion process. In one embodiment of the invention a thermoset resin, such as vinyl ester, epoxy resin, or cyanate ester is used. The substrate may alternatively be any other shape which has a uniform longitudinal cross-section. Pultrusion is a known technique, examples of pultrusion techniques are explained in 'Pultrusion for Engineers' Edited by Trevor F Starr, CRC Press; 1 edition (2000). Alternatives to making the substrate by pultrusion include, for example, moulding the substrate.

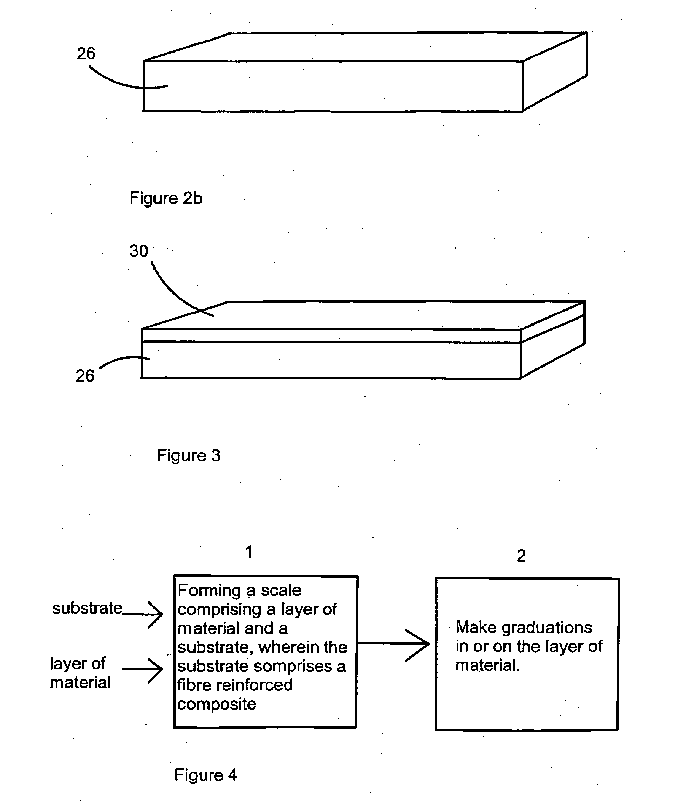

Figure 2b shows an isometric view of a carbon fibre substrate 26 which has been made by pultrusion as illustrated in figure 2a. The substrate may alternatively be an aramid fibre composite, glass fibre composite, or a combination of fibre reinforced composites such as carbon, aramid fibre and glass fibre composites. Typically the fibre reinforced composite is opaque. The fibres, the resin which is poured over the fibres before they enter the die, and the ratio of these components, are chosen to achieve the desired properties of the substrate overall.

Figure 4 is a flow diagram showing the steps of the method according to an aspect of the present invention. The first step involves applying a layer of material to a fibre reinforced composite substrate. In one embodiment of the invention, herein described with reference to figure 4, the substrate is a carbon fibre composite and the layer of material is a thin preformed layer of invar metal; this preformed layer is bonded onto the substrate with adhesive. The thickness of the layer is chosen so that the scale as a whole has the desired properties for its use. In this embodiment the substrate is approximately 1.5 mm thick and the layer is approximately 200 microns thick, so that the properties of the scale are predominantly controlled by the properties of the substrate rather than by the properties of the metal layer.

Figure 3 shows a metrological scale made according to the method of the present invention as described with reference to figure 4 above. The scale comprises a carbon fibre substrate 26 and a layer of invar metal 30. The scale shown in figure 3 is a linear scale made by pultrusion; however, rotary scales and two-dimensional scales for example may be made according to other aspects of the method of the present invention. For a two-dimensional scale, it may be desirable for fibres to lie in the direction of travel of both readheads, for example such that the fibres lie orthogonally.

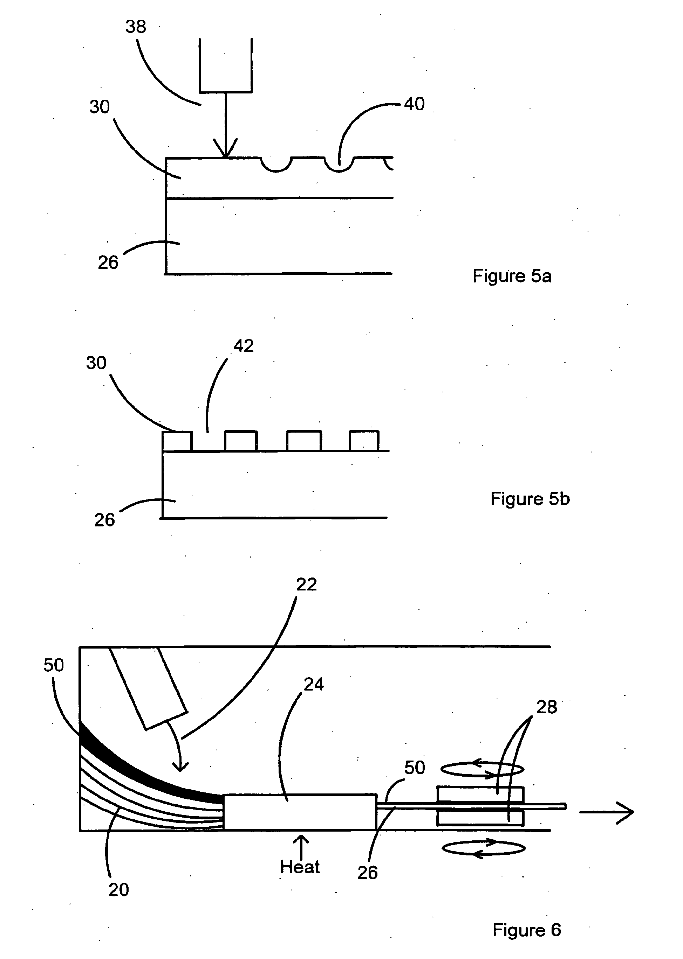

The second step of the method according to an aspect of the present invention involves making graduations in or on the layer of material applied to the substrate in the first step. In the embodiment described above with reference to figure 4 the graduations are made in the metal by etching lines 40 within the thickness of the metal layer using a laser 38, see figure 5a.

Many alternatives to the features of the embodiment described above are possible. Instead of carbon fibre the substrate may be other fibres, such as an aramid fibre composite, glass fibre composite, or a combination of fibre reinforced composites such as carbon, aramid and glass fibre composites.

The layer of material may be reflective or non-reflective, for example a resin with metal particles in it, a resin without metal particles, a dielectic coating, or a layer of ink. Catalytic ink which has been applied as a layer to the substrate can be treated with a laser in selected areas, these areas are chemically changed by the laser such that they may be selectively plated. As the plating is applied it does not stick to the areas of ink which have not been treated with the laser; thus scale markings are created.

If the layer of material applied to the substrate is non-reflective, it is likely that a reflective coating will be added onto the layer; however, even if the layer is reflective a further reflective layer may be added. Any number of layers may be added onto the original layer in order to give a suitable finish. In preferred embodiments of the invention the top layer is corrosion resistant, such as Gold, Nickel or Chrome; however it could be a corrodable layer which is lacquered. It is also possible that an under layer, or layers, of material will be added to the substrate before the layer in which the scale markings are made is applied; this may be to aid bonding of the layer in which the scale markings are to be made to the substrate.

Instead of adding a preformed layer by bonding with adhesive, the layer may be chemically bonded. Alternatively, the layer may be formed directly on the substrate, for example by plating a metal or resin onto the substrate. Plating may be carried out by, for example, vacuum deposition or sputtering. If the layer is plated on the thickness of the layer may be thinner than the thickness of the layer applied by bonding. The optimum thickness of a plated layer is approximately 5-10 microns.

An alternative method according to an aspect of the invention is to form the substrate on a preformed layer of material, for example, as shown in figure 6 by feeding the layer of material 50 into the pultrusion (described with reference to figure 2a) so that the substrate is formed on or around the layer of material. The resin 22 is poured over the fibres 20 in the direction of the arrow and the layer is fed into the die on top of the mixture of resin and fibres. Another alternative is to position the layer in a mould die and mould the substrate on or around the layer. If the substrate is formed around the layer of material, it may be necessary to shave back the substrate to expose the layer it surrounds, in order to make scale markings in the layer. The substrate may be made comprising a layer and a further layer may be applied to said layer, with the scale markings being made in this further layer.

The optimum thickness of the layer of invar metal applied to a 1.5 mm thick substrate is less than approximately 300 microns thick (20% of the thickness of the substrate); this will allow the properties of the substrate to dominate the properties of the scale as a whole. Other materials used for the layer have other optimum thicknesses, for example, the optimum thickness for a stainless steel layer is thinner than the optimum thickness of the invar layer to achieve a similar result. If the layer is thicker than approximately 20% of the thickness of the substrate some bending of the substrate may occur on expansion of the layer due to increased temperature. In order to counteract this it is possible to apply a further layer (of the same material as the first layer) to the opposite side of the substrate.

As an alternative to making graduations by laser etching within the thickness of the layer (fig 5a), graduations may be made in the layer of material by, for example, completely removing the layer at certain areas 42 of the scale, see figure 5b. Depending on the material of the layer, methods such as chemical etching and scribing, amongst many other methods, may be used to make scale markings. As well as incremental scale marks, reference marks for determining the absolute position of the readhead may be made in or on the layer of material.

In an embodiment of the invention where the layer is non-reflective the scale marks may comprise a series of alternating light and dark coloured scale markings. This type of scale apparatus is also reflective type apparatus, as the different wavelengths of light reflected from the different coloured markings are sensed at the readhead.

## Claims

1. A method of making a metrological scale for scale reading apparatus comprising:
a. making a scale body comprising a layer (30) of material and a fibre reinforced composite substrate (26); and then
b. making graduations (40, 42) in the layer (30) of material of the scale body to form a scale,
**characterised in that** the composite substrate is made by pultrusion using a chosen fibre, ratio of fibres to resin and/or type of resin in the composite substrate (26) to achieve a required coefficient of thermal expansion for the composite substrate (26).

2. A method according to claim 1 wherein the chosen fibre, ratio of fibres to resin and/or type of resin in the substrate (26) achieve a substantially zero coefficient of thermal expansion of the scale body.

3. A method according to claim 1 wherein the chosen fibre, ratio of fibres to resin and/or type of resin in the substrate (26) match a coefficient of thermal expansion of the scale body to a coefficient of thermal expansion of an item to be measured by the metrological scale.

4. A method according to any preceding claim wherein the substrate (26) comprises at least one of carbon fibre composite, aramid fibre composite, glass fibre composite, a mix of fibres and resin.

5. A method according to claim 4 wherein the substrate (26) comprises resin and the resin is thermoset resin.

6. A method according to any preceding claim wherein the metrological scale is a reflective type scale.

7. A method according to any preceding claim wherein the layer (30) of material is thinner than the fibre reinforced composite substrate (26).

8. A method according to claim 7 wherein the thickness of the layer (30) is less than 20% of the thickness of the fibre reinforced composite substrate (26).

9. A method according to any preceding claim wherein the layer (30) of material comprises a reflective material.

10. A method according to claim 9 wherein the layer (30) of material comprises at least one of a metal and a resin containing reflective particles.

11. A method according to any of claims 1-8 wherein the layer (30) of material comprises a non-reflective material.

12. A method according to any preceding claim wherein the step of applying the layer (30) of material to a fibre reinforced composite substrate (26) comprises at least one of bonding a preformed layer (30) to the fibre reinforced substrate (26) and plating a layer (30) onto the fibre reinforced substrate (26).

13. A method according to any preceding claim wherein the step of making graduations (40, 42) in the layer (30) of material is performed by at least one of etching within the thickness of the layer (30) of material and completely removing the layer (30) at certain areas of the scale.

14. A method according to any preceding claim further comprising the step of applying a reflective coating to the metrological scale.

## Patentansprüche

1. Verfahren zum Herstellen einer metrologischen Skala für eine Skalenlesevorrichtung, umfassend, dass:
a. ein Skalenkörper, der eine Schicht (30) aus Material sowie ein faserverstärktes Kompositsubstrat (26) umfasst, hergestellt wird; und dann
b. Einteilungen (40, 42) in der Schicht (30) aus Material des Skalenkörpers hergestellt werden, um eine Skala zu bilden,
**dadurch gekennzeichnet, dass** das Kompositsubstrat durch Pultrusion unter Verwendung einer gewählten Faser, eines gewählten Verhältnisses von Fasern zu Harz und/oder eines gewählten Typs von Harz in dem Kompositsubstrat (26) hergestellt wird, um einen erforderlichen Wärmeausdehnungskoeffizienten für das Kompositsubstrat (26) zu erreichen.

2. Verfahren nach Anspruch 1, wobei die gewählte Faser, das gewählte Verhältnis von Fasern zu Harz und/oder der gewählte Typ von Harz in dem Substrat (26) einen Wärmeausdehnungskoeffizienten des Skalenkörpers von im Wesentlichen Null erreichen.

3. Verfahren nach Anspruch 1, wobei die gewählte Faser, das gewählte Verhältnis von Fasern zu Harz und/oder der gewählte Typ von Harz in dem Substrat (26) einen Wärmeausdehnungskoeffizienten des Skalenkörpers an einen Wärmeausdehnungskoeffizienten eines von der metrologischen Skala zu messenden Objekts anpassen.

4. Verfahren nach einem der vorhergehenden Ansprüche, wobei das Substrat (26) zumindest eines von einem Kohlefaserkomposit, einem Aramidfaserkomposit, einem Glasfaserkomposit oder einem Gemisch aus Fasern und Harz umfasst.

5. Verfahren nach Anspruch 4, wobei das Substrat (26) Harz umfasst und das Harz ein duroplastisches Harz ist.

6. Verfahren nach einem der vorhergehenden Ansprüche, wobei die metrologische Skala eine Skala vom reflektiven Typ ist.

7. Verfahren nach einem der vorhergehenden Ansprüche, wobei die Schicht (30) aus Material dünner als das faserverstärkte Kompositsubstrat (26) ist.

8. Verfahren nach Anspruch 7, wobei die Dicke der Schicht (30) kleiner als 20% der Dicke des faserverstärkten Kompositsubstrats (26) ist.

9. Verfahren nach einem der vorhergehenden Ansprüche, wobei die Schicht (30) aus Material ein reflektives Material umfasst.

10. Verfahren nach Anspruch 9, wobei die Schicht (30) aus Material zumindest eines aus einem Metall und einem Harz umfasst, das reflektive Partikel enthält.

11. Verfahren nach einem der Ansprüche 1 - 8, wobei die Schicht (30) aus Material ein nichtreflektives Material umfasst.

12. Verfahren nach einem der vorhergehenden Ansprüche, wobei der Schritt zum Auftragen der Schicht (30) aus Material auf ein faserverstärktes Kompositsubstrat (26) zumindest eines von Kleben bzw. Bonden einer vorgeformten Schicht (30) an das faserverstärkte Substrat (26) und Plattieren einer Schicht (30) auf das faserverstärkte Substrat (26) umfasst.

13. Verfahren nach einem der vorhergehenden Ansprüche, wobei der Schritt zum Herstellen von Einteilungen (40, 42) in der Schicht (30) aus Material durch zumindest eines von Ätzen in der Dicke der Schicht (30) von Material und vollständiges Entfernen der Schicht (30) an gewissen Bereichen der Skala umfasst.

14. Verfahren nach einem der vorhergehenden Ansprüche, ferner mit dem Schritt zum Auftragen einer reflektiven Beschichtung auf die metrologische Skala.

## Revendications

1. Un procédé de fabrication d'une échelle métrologique pour un appareil de lecture d'échelle comprenant :
a. la fabrication d'un corps d'échelle se composant d'une couche (30) de matériau et d'un substrat composite renforcé par des fibres (26) ; et
b. la fabrication de graduations (40, 42) dans la couche (30) de matériau du corps de l'échelle afin de constituer une échelle, **caractérisée en ce que** le substrat composite est fabriqué par pultrusion utilisant une fibre sélectionnée, le taux de fibres par rapport à la résine et/ou le type de résine du substrat composite (26) pour obtenir un coefficient requis de dilatation thermique pour le substrat composite (26).

2. Un procédé selon la revendication 1, dans lequel la fibre sélectionnée, le taux de fibres par rapport à la résine et/ou le type de résine du substrat (26) réalisent un coefficient essentiellement nul de dilatation thermique du corps de l'échelle.

3. Un procédé selon la revendication 1, dans lequel la fibre sélectionnée, le taux de fibres par rapport à la résine et/ou le type de résine du substrat (26) font correspondre un coefficient de dilatation thermique du corps de l'échelle à un coefficient de dilatation thermique d'un article à mesurer par l'échelle métrologique.

4. Un procédé selon l'une quelconque des revendications précédentes, dans lequel le substrat (26) comprend au moins l'un du composite en fibres de carbone, du composite en fibres d'aramide, du composite en fibres de verre, un mélange de fibres et de résine.

5. Un procédé selon la revendication 4, dans lequel le substrat (26) comprend de la résine, et la résine est thermodurcie.

6. Un procédé selon l'une quelconque des revendications précédentes, dans lequel l'échelle métrologique est une échelle de type réfléchissant.

7. Un procédé selon l'une quelconque des revendications précédentes, dans lequel la couche (30) de matériau est plus mince que le substrat composite renforcé par des fibres (26).

8. Un procédé selon la revendication 7, dans lequel l'épaisseur de la couche (30) est inférieure à 20 % de l'épaisseur du substrat composite renforcé par des fibres (26).

9. Un procédé selon l'une quelconque des revendications précédentes, dans lequel la couche (30) de matériau comprend un matériau réfléchissant.

10. Un procédé selon la revendication 9, dans lequel la couche (30) de matériau comprend au moins l'un d'un métal et d'une résine contenant des particules réfléchissantes.

11. Un procédé selon l'une quelconque des revendications de 1 à 8, dans lequel la couche (30) de matériau comprend un matériau non réfléchissant.

12. Un procédé selon l'une quelconque des revendications précédentes, dans lequel l'étape d'application de la couche (30) de matériau sur un substrat composite renforcé par des fibres (26) comprend au moins l'un du collage d'une couche préformée (30) sur le substrat renforcé par des fibres (26) et le placage d'une couche (30) sur le substrat renforcé par des fibres (26).

13. Un procédé selon l'une quelconque des revendications précédentes, dans lequel l'étape de fabrication des graduations (40, 42) dans la couche (30) du matériau est exécutée par au moins l'une de gravure dans l'épaisseur de la couche (30) de matériau et éliminant complètement la couche (30) à certaines endroits de l'échelle.

14. Un procédé selon l'une quelconque des revendications précédentes, comprenant par ailleurs l'étape d'application d'un revêtement réfléchissant sur l'échelle métrologique.
